# EUROPEAN PATENT SPECIFICATION

(11) **EP 4 021 670 B1**
(45) Date of publication and mention of the grant of the patent: **01.05.2024**
(21) Application number: 20856691.9
(22) Date of filing: 24.08.2020
(51) Int. Cl.: B22F 10/28, B22F 10/38, B22F 10/50, B22F 12/00, B22F 12/60, B22F 12/90, B33Y 30/00, B33Y 50/02

(54) **AN ADDITIVE MANUFACTURING MACHINE**
MASCHINE ZUR GENERATIVEN FERTIGUNG
MACHINE DE FABRICATION ADDITIVE

(30) Priority: 29.08.2019 TR 201913134
(43) Date of publication of application: 06.07.2022
(73) Proprietor: Tusas- Turk Havacilik Ve Uzay Sanayii Anonim Sirketi, 06980 Kazan/Ankara (TR)
(72) Inventor: YAVAS, Hakan, 06980 Ankara (TR); TANRIKULU, Ahmet Alptug, 06980 Ankara (TR); ECE, Remzi Ecmel, 06980 Ankara (TR)
(74) Representative: Cayli, Hülya
(86) International application number: PCT/TR2020/050747
(87) International publication number: WO 2021/040654

(56) References cited:
- WO-A1-2018/029469
- WO-A1-2018/029469
- WO-A1-2019/084430
- WO-A1-2019/084430
- US-A1- 2013 197 683
- US-A1- 2013 197 683
- US-A1- 2017 129 180

## Description

The present invention relates to an additive manufacturing machine which allows part production.

Additive manufacturing methods have been used in especially aviation industry for part production in recent years. The additive manufacturing or more commonly known as three-dimensional compression method is a production method that enables production of three-dimensional parts and/or prototypes by laying metal, ceramic or polymer layers on top of suitable powders or fine wires and subjecting them to heat treatment with a printing tip. In this production method, parts are combined as layers on top of each other. Considering today's rapidly developing aviation and space technologies, production of ceramic, metal or plastic materials with additive manufacturing technology becomes important, and studies on process improvement continue. Especially for the production of aviation parts, heat sources such as electron beams and laser sources are used for the purpose of melting or sintering the laid powders.

Chinese patent document CN107584118A, which is included in the known state of the art, discloses an element which can be used for metal parts produced by additive manufacturing, and applies pressure to a layer by forging method. This element applies heat treatment to the part besides the forging process. Moreover, there is provided an electronic control unit which controls this apparatus. The control unit enables the applied pressure and time to be electronically controlled. Accordingly, a control unit is required for pressure applications. In the known state of the art, pressure applications are implemented for the layers thanks to the control unit; however, the pressure application cannot effectively apply pressure locally to the sintered layer.

In US patent document US8911823B2, which is included in the known state of the art, the mechanical energy for sintering powders is provided by uniaxial compression, hydrostatical pressure and ultrasonic energy. A mechanical sintering process is applied for turning the powders into a film. To achieve this, the film is passed between the rollers or mechanical pressure is applied on the film uniaxially. In addition, technique of pressing the nanoparticle layer by ultrasonic sealing head is also protected. In the known state of the art, these applications have been realized for flat surfaces which do not have a complex structure. Such an application included in the known state of the art would not be appropriate for a surface having a complex structure. In the known state of the art, mechanical pressure application on a thin layer has been used to achieve sintering, to form stronger bonds between powders and to provide plastic deformation. In additive manufacturing method, the part produced in a layered manner may have several different surface shapes. Each layer is designed individually. For that reason, the applied mechanical pressure cannot provide effective pressurization for each point on the layer surface.

In Chinese patent document CN105215359A, which is included in the known state of the art, pressure is applied on the layer by means of pressurized gas in the layered manufacturing of a metallic part. This document discloses a pressure application method suitable for layer geometry. Although the known state of the art mentions the applicability of pressure to each point of the layer, the problem remains unsolved since it is not possible to reach sufficient force levels applied by the gas pressure.

US patent document US7241415B2, which is included in the known state of the art, discloses a metallic part production system and method in which sintering is selectively inhibited. The known state of the art comprises the steps of: spreading a thin layer of metallic powder; depositing a sinter-inhibiting material (e.g. ceramic slurry) for each layer and inhibiting the sintering; and compressing each layer before applying the next layer. Said compression process is achieved by a motorized press comprising a pressure sensor. The pressure application is programmed such that each layer receives equal amount of pressure in total. It is stated in the known state of the art that the compression process can be performed before or after chemical compression. Alternatively, it is mentioned that piston and tank may be made of ceramic. As the known state of the art does not include a shock application, the problem of not achieving sufficient plastic deformation is observed. In addition, pressing process is applied on the whole layer. It cannot solve the problem of not seeing equal plastic deformation in selected regions.

UK patent application WO2016092253A1, which is included in the known state of the art, discloses an additive manufacturing system and method, which comprises a impact/pressure unit integrated in the system. The method comprises the steps of applying heat on a region of the part to be processed; adding a material to the melted portion and creating a material layer on said part; cooling the created layer; performing a surface treatment by a plurality of impact units which can be controlled independently from each other, and thus, providing plastic deformation for said cooled layer. It is mentioned that the surface treatment is performed by applying pressure at a desired direction and force to a desired point on the processed part by the plurality of impact units. It is mentioned that the impact units can be connected to a robotic arm and controlled by a control unit. End portion of the impact unit may have different geometrical shapes and may be changed according to the process to be applied. Shaping process may comprise applying pressure during solidification after cooling or before completion of the cooling. Although the known state of the art mentions that different forces can be applied for different geometries, it does not includes mechanical shock wave application. This does not provide an effective solution for complex geometries.

US patent application US20170274585A1, which is included in the known state of the art, discloses an additive manufacturing system and method, in which filament shaping is used. The system comprises a shaping arm. The shaping arm applies downward pressure onto the softened filament. It is mentioned that the arm is controlled by a control unit and provides movement in three directions. In said system, a feed subsystem provides filament onto a processed material; a laser heating system applies heat on the filament; and during solidification of the filament, the shaping arm applies pressure on the filament. In the known state of the art, additive manufacturing machines allows layered production of metal, ceramic or polymer powders with complex geometry, which cannot be produced with a mould, in a selected and previously-drawn and sliced manner by means of computer-assisted drawing programs. Therefore, production can be provided for all kinds of shapes. Complex structures which cannot be produced by moulding or machining can be obtained. In the known state of the art, material powders are transferred from a powder chamber to a table part of the machine, that is, the actual work part, by means of a powder transfer apparatus. As each layer is completed, the transfer apparatus pushes an equal amount of powder to the table. Then, the heat source heats, melts, fuses the selected regions and allows them to be sintered. Therefore, a layer is formed and a following layer is handled. It is quite common to use heat for sintering and fusing processes. In the known state of the art, a porous structure naturally occurs since the parts produced in additive manufacturing machines are produced from powders inside their layers. Such a porous structure caused by inability of powders to fully combine during sintering or fusion processes may lead internal cracks in the material over time. In addition, residual internal stresses and internal cracks may be observed. These may cause the material to be broken during usage. For that reason, there is a need for a mechanical shock that can be applied externally. The present invention offers a solution to this technical problem. In the known state of the art, plastic deformation in the layer is provided by mechanical pressure applying apparatuses. However, layers may have a complex geometric structure. A flat pressure applying apparatus remains incapable of offering a solution to apply equal amount of pressure on each point of layers with complex geometry.

US2017129180A1 discloses an additive manufacturing machine comprising a body; a table which is located on the body and allows powders to be laid thereon by means of a laying apparatus; at least one layer which is created by sintering or fusing the powders laid on the table; a part which is produced by piling up the layers using additive manufacturing method; at least one heat source which is located on the body and applies heat treatment to powders laid on the table; at least one sensor for detecting position and operating status of the heat source; and at least one control unit controlling the heat source based on information received from the sensor, wherein at least one head is located on the body in a movable manner, controlled by the sensor and the control unit, and applying pressure on the layer, further comprising at least one trigger mechanism for moving the head and which is located on the body, wherein movements of the trigger mechanism are controlled by the control unit, a control unit for electronically controlling the pressure amount applied by the trigger mechanism to the layer by means of the head, speed or movements of the trigger mechanism during part production, wherein the control unit triggers the head and allows an amount of force predetermined by the user to be applied on the layer.

An object of the invention is to increase efficiency and effective production of the additive manufacturing machine.

Another object of the invention is to increase strength of the parts produced by the additive manufacturing machine.

A further object of the invention is to reduce or prevent the formation of porosity in the produced part.

The additive manufacturing machine realized to achieve the object of the invention and defined in the first claim and the other claims dependent thereon comprises a body; a table which is connected to the body, wherein material powders to be used in part production are transferred onto the table by a laying apparatus; at least one layer which is produced by sintering or fusing the powders laid on the table; a part which is obtained by piling up the layers using additive manufacturing method; at least one heat source which is located on the body and applies heat treatment to powders transferred onto the table; at least one sensor which enables position, movements, orientation and operating status of the heat source to be detected; and at least one control unit controlling the heat source based on information received from the sensor.

The additive manufacturing machine of the invention comprises a head located on the body in a movable manner, controlled by the sensor and the control unit, almost completely surrounding the layer on which the head is contacted, and thus, applying pressure on the layer.

In an embodiment of the invention, the additive manufacturing machine comprises a head comprising multiple particles therein.

In an embodiment of the invention, the additive manufacturing machine comprises a head, outer material of which is semi-elastic.

In an embodiment of the invention, the additive manufacturing machine comprises a trigger mechanism which is located on the body and triggers movement of the head, wherein the control unit controls movement of the trigger mechanism.

In an embodiment of the invention, the additive manufacturing machine comprises a control unit for electrically controlling the force applied by the trigger mechanism to the layer by means of the head, speed thereof or movements of the trigger mechanism during part production.

In an embodiment of the invention, the additive manufacturing machine comprises a control unit which enables the head moved by means of the trigger mechanism to contact the layer, to apply pressure and at least partially to take the shape of the layer, and to apply a mechanical shock by applying a force higher than the force it contacts.

In an embodiment of the invention, the additive manufacturing machine comprises a head which creates plastic deformation by applying mechanical shock with the trigger mechanism onto the layer, and comprises ceramic particles with a fluid structure.

In an embodiment of the invention, the additive manufacturing machine comprises a control unit for measuring a surface hardness of the layer onto which a force is applied based on information sent by the head to the sensor.

In an embodiment of the invention, the additive manufacturing machine comprises a control unit which allows an amount of force preselected by the user to be applied on the layer by moving the head.

Exemplary embodiments of the additive manufacturing machine according to the present invention are illustrated in the attached drawings, in which:

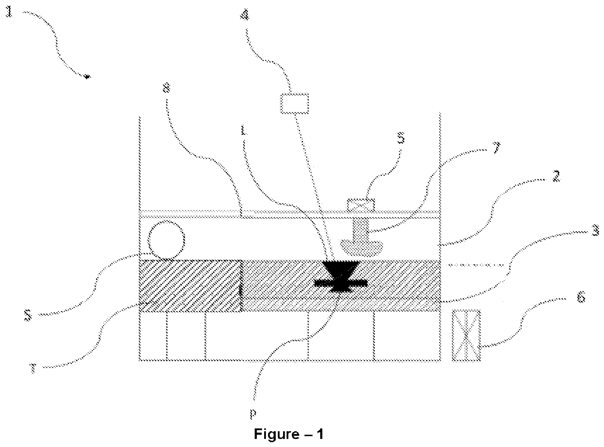

Figure 1 is a schematic view of an additive manufacturing machine.

All the parts illustrated in figures are individually assigned a reference numeral and the corresponding terms of these numbers are listed as follows:
- (1): Additive Manufacturing Machine
- (2): Body
- (3): Table
- (4): Heat Source
- (5): Sensor
- (6): Control Unit
- (7): Head
- (8): Trigger Mechanism
- (L): Layer
- (P): Part
- (S): Laying Apparatus
- (T): Dust

The additive manufacturing machine (1) comprises a body (2); a table (3) which is located on the body (2) and allows powders (T) to be laid thereon by means of a laying apparatus (S); at least one layer (L) which is created by sintering or fusing the powders (T) laid on the table (3); a part (P) which is produced by piling up the layers (L) using additive manufacturing method; at least one heat source (4) which is located on the body (2) and applies heat treatment to powders (T) laid on the table (3); at least one sensor (5) for detecting position and operating status of the heat source (4); and at least one control unit (6) controlling the heat source (4) based on information received from the sensor (5) (Figure 1).

The additive manufacturing machine (1) of the invention comprises at least one head (7) located on the body (2) in a movable manner, controlled by the sensor (5) and the control unit (6), almost completely surrounding the layer (L) when the layer (L) is contacted thereon, and thus, applying pressure on the layer (L) (Figure 1).

Parts (P) with complex geometry are enabled to be produced in additive manufacturing machines (1). To achieve this, powders (T) to be used in part (P) production are laid onto the table (3) in the body (2) by means of the laying apparatus (S). Then, preselected regions of each part (P) are melted or sintered by the heat source (4). The heat source (4), on the other hand, is managed by the control unit (6) based on information acquired by the sensor (5).

There is provided a head which can almost take the shape of the layer and applies pressure on the layer (L) by means of the control mechanism (6) to create plastic deformation on the part (P). Therefore, pressure is effectively applied to the layer surface (Figure 1).

In an embodiment of the invention, the additive manufacturing machine (1) comprises a head (7) comprising a plurality of particles therein. The particles enable the head to easily take a shape. Therefore, the head can apply an effective pressure on the layer (L).

According to the invention, the additive manufacturing machine (1) comprises a head (7), outer perimeter of which is made of a semi-elastic material. Therefore, the head (7) can be almost completely matched with layer (L) surface while applying pressure to the layer (L) surface thanks to the elastic material.

In an embodiment of the invention, the additive manufacturing machine (1) comprises a trigger mechanism (8) for moving the head (7) and which is located on the body (2), wherein movements of the trigger mechanism (8) are controlled by the control unit (6). Therefore, the head (7) can be moved in a way predetermined by the user or manufacturer.

In an embodiment of the invention, the additive manufacturing machine (1) comprises a control unit (6) for electronically controlling the pressure amount applied by the trigger mechanism (8) to the layer (L) by means of the head (7), speed or movements of the trigger mechanism (8) during part production. Therefore, the trigger mechanism (8) can be controlled.

In an embodiment of the invention, the additive manufacturing machine (1) comprises a control unit (6) which enables the head (7) moved by means of the trigger mechanism (8) to contact and apply pressure to the layer (L), and at least partially to take the shape of the layer (L), and to apply a mechanical shock by applying a force higher than the force it contacts. Therefore, the part (P) is subjected to plastic deformation such that it is easily shaped.

In an embodiment of the invention, the additive manufacturing machine (1) comprises a head (7) which enables plastic deformation to be created by applying mechanical shock by means of the trigger mechanism (8) onto the layer (L), and comprises fluid ceramic particles. Thus, it is enabled that an effective and instant shock is applied to the layer (L) and the part is plastically deformed. Therefore, the part is effectively shaped.

In an embodiment of the invention, the additive manufacturing machine (1) comprises a control unit (6) for measuring a surface hardness of the layer (L) onto which the head (7) applies a force based on information sent by the head (7) to the sensor (5). The sensor (5) detects the hardness, and sends the detected signals to the control unit (6). The control unit (6) provides control of the force applied to the layer (L) by the head (7) depending on hardness value measured by means of the sensor (5).

In an embodiment of the invention, the additive manufacturing machine (1) comprises a control unit (6) which triggers the head (7) and allows an amount of force predetermined by the user to be applied on the layer (L). The control unit (6) allows an amount of force predetermined by the user and/or manufacturer to be applied.

## Claims

1. An additive manufacturing machine (1) comprising a body (2); a table (3) which is located on the body (2) and allows powders (T) to be laid thereon by means of a laying apparatus (S); at least one layer (L) which is created by sintering or fusing the powders (T) laid on the table (3); a part (P) which is produced by piling up the layers (L) using additive manufacturing method; at least one heat source (4) which is located on the body (2) and applies heat treatment to powders (T) laid on the table (3); at least one sensor (5) for detecting position and operating status of the heat source (4); and at least one control unit (6) controlling the heat source (4) based on information received from the sensor (5), **characterized by** at least one head (7) located on the body (2) in a movable manner, controlled by the sensor (5) and the control unit (6), covering the layer (L) when the layer (L) is contacted thereon, and thus, applying pressure on the layer (L), wherein perimeter of said head (7) is made of a semi-elastic material to completely match with layer (L) surface while applying pressure to the layer (L) surface.

2. An additive manufacturing machine (1) according to claim 1, **characterized by** a head (7) comprising a plurality of particles therein.

3. An additive manufacturing machine (1) according to any of the preceding claims, **characterized by** at least one trigger mechanism (8) for moving the head (7) and which is located on the body (2), wherein movements of the trigger mechanism (8) are controlled by the control unit (6).

4. An additive manufacturing machine (1) according to claim 3, **characterized by** a control unit (6) for electronically controlling the pressure amount applied by the trigger mechanism (8) to the layer (L) by means of the head (7), speed or movements of the trigger mechanism (8) during part production.

5. An additive manufacturing machine (1) according to claim 3 or claim 4, **characterized by** a control unit (6) which enables the head (7) moved by means of the trigger mechanism (8):
• to contact and apply pressure to the layer (L), and at least partially to take the shape of the layer (L), and
• to apply a mechanical shock by applying a force higher than the force it contacts.

6. An additive manufacturing machine (1) according to any of the claims 3 to 5, **characterized by** a head (7) which enables plastic deformation to be created by applying mechanical shock by means of the trigger mechanism (8) onto the layer (L), and comprises fluid ceramic particles.

7. An additive manufacturing machine (1) according to any of the preceding claims, **characterized by** a control unit (6) for measuring a surface hardness of the layer (L) onto which the head (7) applies a force based on information sent by the head (7) to the sensor (5).

8. An additive manufacturing machine (1) according to any of the preceding claims, **characterized by** a control unit (6) which triggers the head (7) and allows an amount of force predetermined by the user to be applied on the layer (L).

## Patentansprüche

1. Maschine (1) zur additiven Fertigung mit einem Gehäuserahmen (2), einem Tisch (3), der sich an dem Gehäuserahmen (2) befindet und der es erlaubt, darauf Pulver mittels einer Auslegevorrichtung (S) auszulegen, wenigstens einer Schicht (L), die durch Sintern oder Schmelzen des auf den Tisch (3) ausgelegten Pulvers erzeugt ist, einem Teil (P), das durch Übereinanderschichten von Schichten (L) unter Anwendung additiver Fertigung hergestellt ist, wenigstens einer Wärmequelle (4), die sich an dem Gehäuserahmen (2) befindet und eine Wärmebehandlung an dem auf den Tisch (3) ausgelegten Pulver (T) ausführt, wenigstens einem Sensor (5) zum Detektieren der Position und des Betriebszustands der Wärmequelle (4), und wenigstens einer Steuereinheit (6), die die Wärmequelle (4) auf Basis von von dem Sensor (5) empfangenen Informationen steuert, **gekennzeichnet durch** wenigstens einen Kopf (7), der an dem Gehäuserahmen (2) in beweglicher Weise angebracht ist, der durch den Sensor (5) und die Steuereinheit (6) gesteuert wird, der die Schicht (L), wenn die Schicht (L) in Kontakt daran ist, abdeckt und daher Druck auf die Schicht (L) ausübt, wobei der Umfangsrand des Kopfes (7) aus einem halbelastischen Material hergestellt ist, um sich vollständig an die Oberfläche der Schicht (L) anzupassen, während Druck auf die Oberfläche der Schicht (L) ausgeübt wird.

2. Maschine (1) zur additiven Fertigung nach Anspruch 1, **gekennzeichnet durch** einen Kopf (7), der eine Vielzahl von Teilchen darin enthält.

3. Maschine (1) zur additiven Fertigung gemäß einem der vorhergehenden Ansprüche, **gekennzeichnet durch** wenigstens einen Auslösemechanismus (8), der zum Bewegen des Kopfes (7) dient und der an dem Gehäuserahmen (2) angeordnet ist, wobei die Bewegungen des Auslösemechanismus (8) durch die Steuereinheit (6) gesteuert werden.

4. Maschine (1) zur additiven Fertigung gemäß Anspruch 3, **gekennzeichnet durch** eine Steuereinheit (6) zum elektronischen Steuern des Druckbetrags, der durch den Auslösemechanismus (8) mittels des Kopfes (7) auf die Schicht (L) ausgeübt wird, der Geschwindigkeit oder der Bewegungen des Auslösemechanismus (8) während der Produktion des Teils.

5. Maschine (1) zur additiven Fertigung gemäß Anspruch 3 oder Anspruch 4, **gekennzeichnet durch** eine Steuereinheit (6), die es ermöglicht, dass der Kopf (7) mittels des Auslösemechanismus (8) bewegt wird,
um die Schicht (L) zu kontaktieren und Druck darauf auszuüben und wenigstens teilweise die Form der Schicht (L) anzunehmen, und
einen mechanischen Schock auszuüben, indem eine Kraft ausgeübt wird, die größer als die Kraft beim Kontakt ist.

6. Maschine (1) zur additiven Fertigung gemäß einem der Ansprüche 3 bis 5, **gekennzeichnet durch** einen Kopf (7), der es ermöglicht, durch Anwenden von mechanischem Schock mittels des Auslösemechanismus (8) auf die Schicht (L) plastische Deformation zu erzeugen, und der fluide Keramikteilchen aufweist.

7. Maschine (1) zur additiven Fertigung gemäß einem der vorhergehenden Ansprüche, **gekennzeichnet durch** eine Steuereinheit (6) zur Messung einer Oberflächenhärte der Schicht (L), auf die der Kopf (7) eine Kraft ausübt, basierend auf Informationen, die von dem Kopf (7) zum Sensor (5) gesendet werden.

8. Maschine (1) zur additiven Fertigung gemäß einem der vorhergehenden Ansprüche, **gekennzeichnet durch** eine Steuereinheit (6), die den Kopf (7) ansteuert und die es ermöglicht, einen durch den Benutzer vorgegebenen Kraftbetrag auf die Schicht (L) auszuüben.

## Revendications

1. Machine de fabrication additive (1) comprenant un corps (2) ; une table (3) qui est située sur le corps (2) et permet d'y déposer des poudres (T) au moyen d'un appareil de pose (S) ; au moins une couche (L) qui est créée par frittage ou fusion des poudres (T) déposées sur la table (3) ; une pièce (P) qui est produite par l'empilement des couches (L) au moyen d'un procédé de fabrication additive ; au moins une source de chaleur (4) qui est située sur le corps (2) et appliques un traitement thermique aux poudres (T) déposées sur la table (3) ; au moins un capteur (5) pour détecter une position et un état de fonctionnement de la source de chaleur (4) ; et au moins une unité de commande (6) commandant la source de chaleur (4) sur la base des informations reçues du capteur (5), **caractérisée par** au moins une tête (7) située sur le corps (2) de manière mobile, contrôlée par le capteur (5) et l'unité de commande (6), couvrant la couche (L) lorsque la couche (L) est en contact avec elle, et appliquant ainsi une pression sur la couche (L), dans laquelle un périmètre de ladite tête (7) est constitué d'un matériau semi-élastique pour s'adapter complètement à la surface de couche (L) tout en appliquant une pression sur la surface de couche (L).

2. Machine de fabrication additive (1) selon la revendication 1, **caractérisée par** une tête (7) comprenant une pluralité de particules à l'intérieur.

3. Machine de fabrication additive (1) selon l'une quelconque des revendications précédentes, **caractérisée par** au moins un mécanisme de déclenchement (8) pour déplacer la tête (7) et qui est situé sur le corps (2), dans laquelle les mouvements du mécanisme de déclenchement (8) sont commandés par l'unité de commande (6).

4. Machine de fabrication additive (1) selon la revendication 3, **caractérisée par** une unité de commande (6) pour contrôler électroniquement la pression appliquée par le mécanisme de déclenchement (8) sur la couche (L) au moyen de la tête (7), la vitesse ou les mouvements du mécanisme de déclenchement (8) pendant la production de pièce.

5. Machine de fabrication additive (1) selon la revendication 3 ou la revendication 4, **caractérisée par** une unité de commande (6) qui permet de déplacer la tête (7) au moyen du mécanisme de déclenchement (8) :
• d'entrer en contact avec la couche (L) et d'exercer une pression sur elle, et de prendre au moins partiellement la forme de la couche (L), et
• d'appliquer un choc mécanique en appliquant une force supérieure à la force qu'il contacte.

6. Machine de fabrication additive (1) selon l'une quelconque des revendications 3 à 5, **caractérisée par** une tête (7) qui permet de créer une déformation plastique en appliquant un choc mécanique au moyen du mécanisme de déclenchement (8) sur la couche (L), et qui comprend des particules céramiques fluides.

7. Machine de fabrication additive (1) selon l'une quelconque des revendications précédentes, **caractérisée par** une unité de commande (6) pour mesurer une dureté de surface de la couche (L) sur laquelle la tête (7) applique une force sur la base d'informations envoyées par la tête (7) au capteur (5).

8. Machine de fabrication additive (1) selon l'une quelconque des revendications précédentes, **caractérisée par** une unité de commande (6) qui déclenche la tête (7) et permet d'appliquer sur la couche (L) une quantité de force prédéterminée par l'utilisateur.
